# EUROPEAN PATENT APPLICATION

(11) **EP 1 612 513 A1**
(43) Date of publication of application: **04.01.2006**
(21) Application number: 05253037.5
(22) Date of filing: 18.05.2005
(51) Int. Cl.: G01C 21/00

(54) **Method and system for specifying a location using a wireless device**

(30) Priority: 28.06.2004 US 878950
(71) Applicant: Agilent Technologies, Inc., Palo Alto, California 94306 (US)
(72) Inventor: Warrior, Jogesh, Mountain View, CA 94040 (US); Liu, Jerry J., Sunnyvale, CA 94086 (US)
(74) Representative: Jehan, Robert

(57) **Abstract**

A wireless device (400) displays a view of location data (200) to a user. The location data includes readily recognizable features in a geographical area, such as a geographical map or a list of cities, neighbourhoods, businesses, intersections, streets, or landmarks. A user selects a particular location data from the view and the selected location data is displayed in more detail. The process of selecting particular location data and displaying that location data in more detail continues until a location can be specified from the displayed view.

## Description

The present invention relates to an method and system for specifying a location using a wireless device.

Recent and ongoing innovations in wireless technology have resulted in the increased use of wireless devices, such as, computing devices, cellular telephones, and personal digital assistants (PDAs). This increased use has lead to a need for different types of programs and technologies for wireless devices. One such technology is a location determination application that provides a user or a third party, such as a wireless service provider, with location information.

One example of a location determination technology is Global Positioning System (GPS). A GPS device provides the latitude and longitude for the location of the device within a specified level of certainty. For example, the location provided by GPS will be within ten meters of the actual location of the device. Due to this margin of error, GPS technology typically provides different location readings for each location request, even when the device itself is stationary.

Unfortunately, GPS may not function in all locations, such as the interior areas of buildings and underground parking structures. Furthermore, GPS does not provide location data in a user-friendly manner. In many applications, the latitude and longitude data generated by GPS are transformed into a more understandable format, such as a city or street location, via the process of reverse geocoding.

The present invention need to provide improved location determination.

According to an aspect of the present invention, there is provided a method of specifying a location using a wireless device as specified in claim 1.

According to another aspect of the present invention, there is provided a wireless device as specified in claim 7.

In accordance with the preferred embodiments, a method and system for specifying a location using a wireless device are provided. A wireless device displays a view of location data to a user. The location data includes readily recognizable features in a geographical area, such as a geographical map or a list of cities, neighbourhoods, businesses, intersections, street, or landmarks. A user selects a particular location data from the view and the selected location data is displayed in more detail. The process of selecting particular location data and displaying that location data in more detail continues until a location can be specified as a desired level of detail.

Embodiments of the present invention are described below, by way of example only, with reference to the accompanying drawings, in which:
FIG. 1 is a flowchart of a method for specifying a location using a wireless device in an embodiment in accordance with the invention;
FIGS. 2A-2D are graphical illustrations depicting a method for specifying a location using a wireless device in accordance with the flowchart of FIG. 1;
FIG. 3 is an illustration of a user interface used in a method for specifying a location in an embodiment in accordance with the invention.
FIG. 4 is a block diagram of a memory in a wireless device in an embodiment in accordance with the invention; and
FIG. 5 is a graphical illustration of a software architecture in a wireless device in an embodiment in accordance with the invention.

The following description is presented to enable one skilled in the art to make and use embodiments of the invention, and is provided in the context of a patent application and its requirements. Various modifications to the disclosed embodiments will be readily apparent to those skilled in the art, and the generic principles herein may be applied to other embodiments. Thus, the invention is not intended to be limited to the embodiments shown, but is to be accorded the widest scope consistent with the appended claims and with the principles and features described herein.

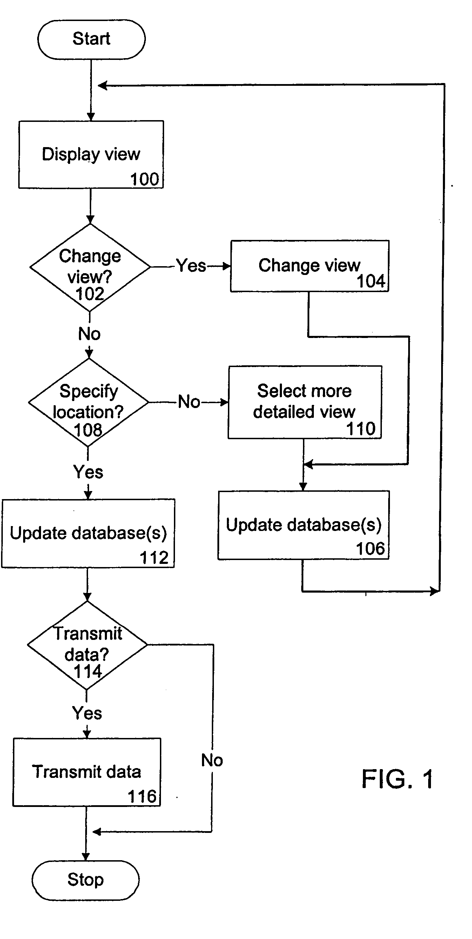

With reference to the figures and in particular with reference to **FIG.1**, there is shown a flowchart of a method for specifying a location using a wireless device in an embodiment in accordance with the invention. The process begins by displaying a view to a user (block 100). In this embodiment, the view may be a most recently used view, a default view programmed by the manufacturer, or a view specified by a user in a user preference database. In other embodiments in accordance with the invention, the view may be based on other factors, such as, for example, a view downloaded to the wireless device.

A determination is then made at block 102 as to whether the user would like to change the displayed view. For example, the view displayed, in block 100 may initially be based on a default view programmed by the manufacturer. The user, however, would like to view a preferred view. The user changes the view by selecting a new view at block 104. The selected new view may be obtained, for example, from a database, a list of geographical data, such as landmarks, cities, or streets, or it may be obtained by downloading location data to the wireless device.

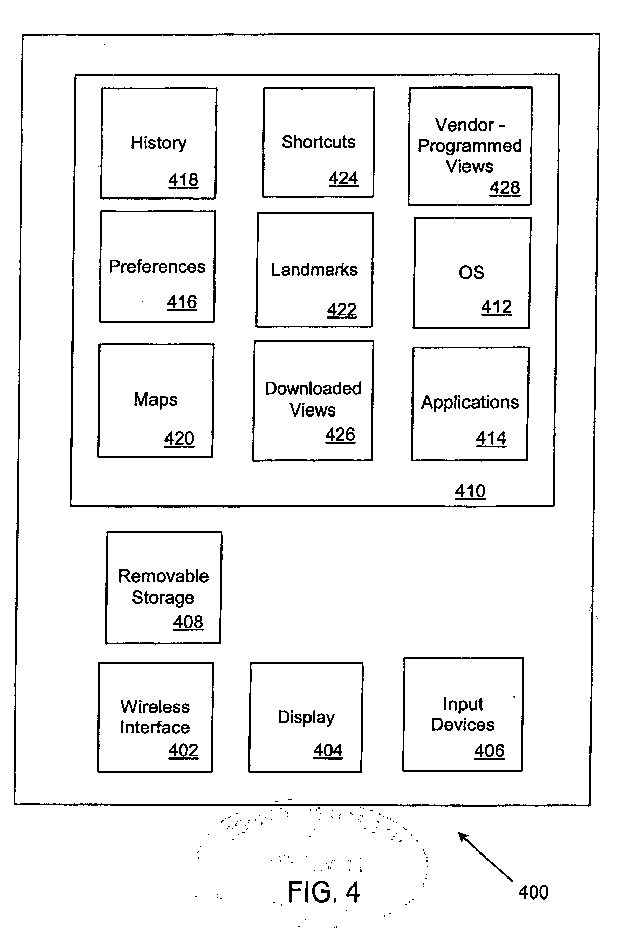

One or more databases are then updated at block 106 and the process returns to block 100. The one or more databases include a history database that records historical data regarding a user's selections. This database is used to provide a location program with intelligence regarding a user and allow the program to adapt based on previous user interactions. In adapting the program, data from other databases may be accessed as well. The one or more databases may be stored in the wireless device itself, in a removable memory, or in a server accessible over a network. The databases associated with the wireless device are discussed in more detail in conjunction with FIG. 4.

If the user is satisfied with the displayed view, the process passes to block 108 where a determination is made as to whether the user is able to specify a location using the displayed view. The displayed view should display location data with a sufficient level of detail in order to allow the user to specify a location with a desired level of accuracy. The specified location may be the location of the user or it may be the location of a business, a street address, an intersection, or a landmark.

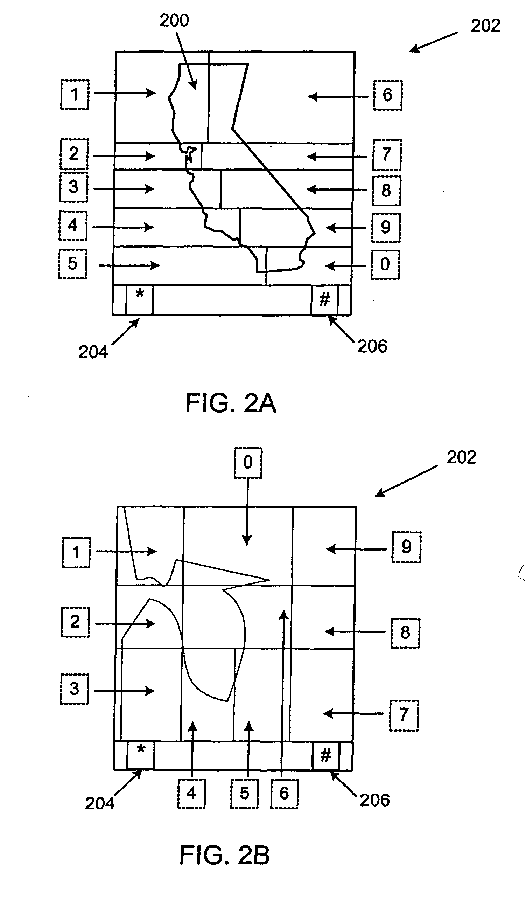

If the user is unable to specify a location using the displayed view, the user selects a more detailed view using the image on the display, as shown in block 110. The history database and possibly other databases are then updated at block 106 and the process returns to block 100. Techniques for selecting more detailed views will be described in more detail in conjunction with **FIGS. 2A-2D.**

When the user is able to specify a location with a desired level of accuracy, one or more databases associated with the wireless device are updated, as shown in block 112. Block 112 is similar to block 106. A determination is then made a block 114 as to whether the location data are to be transmitted to a third party. If not, the user uses the displayed location data for a desired purpose and the process ends. If, however, the data is to be transmitted to a third party, the data is transmitted at block 116 and the process ends.

The location program illustrated in FIG. 1 may be invoked by a user or by an application. The number of times the process passes through block 100 depends on the desired level of detail and the type of data used to determine a location. The selection made from one view determines the data that are displayed in the subsequent view. Additionally, the data included in a view may change based on past history, user preference, and other settings. In this embodiment in accordance with the invention, a location is obtained after a user has displayed four views at block 100. In other embodiments in accordance with the invention, a location may be obtained using any number of displayed views.

**FIGS. 2A-2D** are graphical illustrations depicting a method for specifying a location using a wireless device in an embodiment in accordance with the invention. **FIG. 2A** illustrates a first view displayed to a user when determining a location on a wireless device. In this embodiment, a user initially sees a picture of the state of California 200 on display screen 202. Display screen 202 is divided into 10 rectangles, with each rectangle corresponding to a numeric key (i.e., 0-9) on the cellular telephone. Keys 204, 206 corresponding to * and #, respectively, are used to toggle among different views. In another embodiment in accordance with the invention, additional rectangles may also be displayed in view 200 that correspond to the keys * and #. In yet another embodiment in accordance with the invention, the keys * and # may be used to zoom out to a previous view.

The areas of the rectangles are not equal and are determined by the population of the various geographical regions in California in this embodiment in accordance with the invention. Consequently, the rectangle associated with the number 2 key is smaller than the rectangle associated with the number 6 key because the population of the San Francisco bay area is larger than the population in the northeast region of California. In other embodiments in accordance with the invention, the display screen can be divided into different shapes, areas, and number of shapes. The number of shapes and their dimensions may be determined by the application.

Referring to **FIG. 2B,** a user has selected one of the rectangles using the numeric key that corresponds to the desired rectangle. In the **FIG. 2A** embodiment, the user selected the rectangle associated with the number 2 key, which corresponds to the San Francisco bay area. Display 202 in **FIG. 2B** therefore displays a more detailed view of the information contained in the rectangle associated with the number 2 key in **FIG. 2A.**

The display screen is again divided into 10 rectangles in this embodiment. The areas of the rectangles are not equal, are determined by the population of the various geographical regions in the San Francisco bay area. In other embodiments in accordance with the invention, the display screen can be divided into a different number of shapes and into different styles of shapes. For example, the shapes may be designed as diamonds or circles, or any combination of shapes. The number of shapes and their dimensions are determined by the application.

As discussed earlier, keys 204, 206 corresponding to * and #, respectively, are used to toggle among different views. For example, a user may select key 204 to back up one view and return to view 200, and key 206 may be used to change the view in **FIG. 2B** to a list of cities. The functions associated with keys 204, 206 are programmable and may be modified by the user.

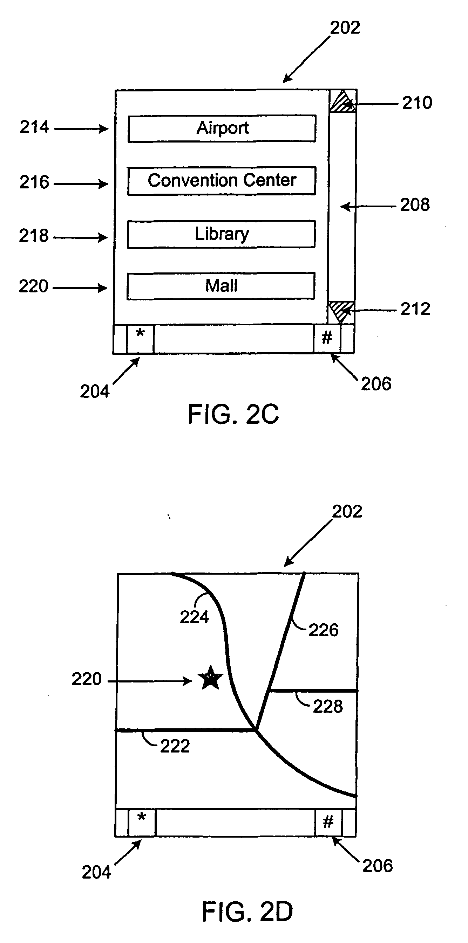

**FIG. 2C** illustrates a list of landmarks that are included in the rectangle associated with a desired rectangle shown in **FIG. 2B.** The list of landmarks includes the spatial coverage for each landmark. A user may also specify the type of landmarks included in the list. For example, a user may want a particular class of landmarks to be displayed, such as, for example, retail stores, office buildings, sporting venues, highways and major thoroughfares, or tourist attractions.

In **FIG. 2B,** the user selected the rectangle associated with the number 4 key, which corresponds to the San Jose area. A scroll bar 208 in **FIG. 2C** provides a user with a mechanism to scroll through the list of landmarks. Up-arrow 210 and down-arrow 212 allow the user to move through the list. The landmarks include an airport 214, a convention center 216, a library 218, and a mall 220 in this embodiment. Additional landmarks may be included in the list and are accessed by scrolling up or down the list. In other embodiments in accordance with the invention, the list may contain data other than landmarks. For example, the list may contain city names and/or street names.

To view a more detailed map of the area around a particular landmark, the user selects one of the landmarks in the list. In this embodiment, the user selected the mall 220. **FIG. 2D** illustrates a more detailed street map of the area surrounding the mall 220. In this view, streets 222, 224, 226, 228 are identified by street names or other identifiers (not shown). A user may use this information, for example, to inform a business of his or her location. The user may transmit the location data to a third party or application using one or more wireless networks. Alternatively, the location data may be requested by an application or third party and transmitted to the requester using one or more wireless networks. For example, a user may transmit his or her location data to a wireless service provider when he or she is having problems obtaining or maintaining a wireless connection.

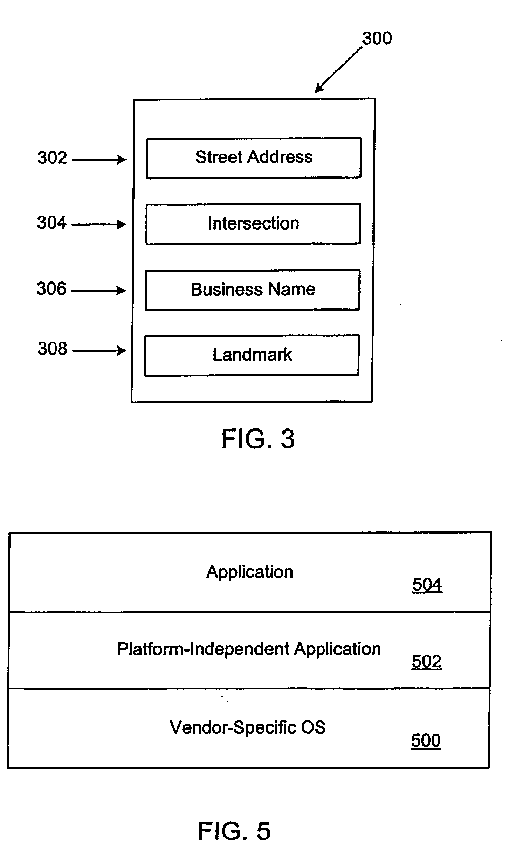

**FIG. 3** is an illustration of a user interface used in a method for specifying a location in an embodiment in accordance with the invention. User interface 300 includes a menu of four selections a user can use to specify a location. The selections include a street address 302, an intersection 304, a name of a business 306, and landmark 308. Based on the menu item selected by the user, a more detailed view of a location may be displayed or a user preference stored in a database. For example, a user may want to begin the process of determining a location using a list of landmarks 308. Alternately, a user may want to find the nearest location of a particular business 306. In other embodiments in accordance with the invention, user interface 300 may include selections other than the ones shown in **FIG. 3,** such as, for example, city and neighborhood.

**FIG. 4** is a block diagram of a wireless device in an embodiment in accordance with the invention. Wireless device 400 includes, but is not limited to, a wireless interface 402, a display 404, one or more input devices 406, and removable storage 408. Wireless interface 402 sends and receives communications and data over one or more wireless networks. The one or more input devices 406 may be implemented, for example, as numeric buttons on a keypad (i.e., 0-9), one or more directional buttons, one or more buttons programmed by the OS or an application, and pointer devices such as a mouse, trackpad, and stylus.

In the embodiment of **FIG. 4,** removable storage 408 may be configured as any desired type of removable memory, including, but not limited to, flash memory cards. Removable storage 408 may be utilized to store location data for one or more locations, to store additional views, such as maps and landmarks, and to provide additional features that may be used in determining location.

A memory 410 stores an operating system (OS) 412, applications 414, and databases and/or files that can be utilized by the location program. Applications 414 include an embodiment of a location program in accordance with the invention. The databases and/or files include preferences database 416, history database 418, maps database 420, landmarks database 422, shortcuts database 424, downloaded views database 426, and vendor-programmed views database 428. Preferences database 416 includes the user's preferences, such as, for example, a preferred order for the views and a preference for graphical views or for views containing lists of data.

History database 418 stores a history of user actions, such as, for example, past decisions, results, and views displayed to a user. These previous actions may be analyzed and used automatically to assist in specifying a location in subsequent sessions. Thus, embodiments in accordance with the invention may use intelligent or adaptive programs for specifying a location.

Maps database 420 stores one or more graphical maps that may include the world, one or more continents, states, cities, and/or neighborhoods within a city. Landmarks database 422 stores one or more landmarks for different regions, such as, for example, the world, one or more continents, states, cities, and/or neighborhoods within a city. Shortcuts database 424 stores user-programmed shortcuts. For example, a user may store a trip or alternate directions to a favorite location. Downloaded views 426 stores views downloaded to wireless device 400. The views may be downloaded from one or more servers within the same or different wireless systems. And finally, vendor-programmed views 428 store one or more views entered into wireless device 400 by the manufacturer of wireless device 400, the wireless service provider, and the retailer of wireless device 400.

Wireless device 400 may be implemented as any type of a wireless device. For example, wireless device 400 may be implemented as a laptop computer, a cellular telephone, or a personal digital assistant. In other embodiments in accordance with the invention, wireless devices may include different or additional features (i.e., blocks) than the ones shown in **FIG. 4.** Furthermore, a wireless device in accordance with the invention may include only a portion of the features illustrated in **FIG. 4.**

Referring now to **FIG. 5,** there is shown a graphical illustration of a software architecture in a wireless device in one embodiment in accordance with the invention. A vendor-specific operating system (OS) 500 is the foundation on which a platform-independent application 502 operates from. An application 504, such as the location application described herein, resides above the platform-independent application 502.

The platform-independent application 502 allows a wireless device to access, transmit, and receive data over one or more wireless networks. In one embodiment in accordance with the invention, the platform-independent application 502 includes Java™, a programming language developed by Sun Microsystems, Inc. Application 502 therefore interacts with Java™, thereby eliminating the need to call or access vendor-specific OS 500.

The disclosures in United States patent application no. 10/878,950, from which this application claims priority, and in the abstract accompanying this applications are incorporated herein by reference.

## Claims

1. A method of specifying a location using a wireless device (400), the method including the steps of:
displaying a view of location data (200);
receiving input from a user based on the view of location data (200);
displaying a more detailed view of location data based on the input received from the user; and
repeating the steps of receiving input from a user and displaying a more detailed view of location data until a location is specifiable from a displayed view.

2. A method according to claim 1, including the steps of:
specifying a location from the displayed view;
updating one or more databases based on the specified location; and
transmitting location data over one or more wireless networks.

3. A method according to claim 1 or 2, including the step of downloading location data to the wireless device (400).

4. A method according to any one of claims 1 to 3, including the step of storing one or more views of location data in the wireless device (400).

5. A method according to any one of claims 1 to 4, wherein the step of receiving input from a user includes:
displaying a list of a plurality of location data to a user; and
selecting a particular location data from the list of a plurality of location data.

6. A method according to any one of claims 1 to 4, wherein the step of receiving input from a user includes:
dividing a view of location data into a plurality of sections; and
selecting one of the segments displayed to the user.

7. A wireless device (400), including:
a memory (410) for storing location data;
a display (404) for displaying a view of location data (200); and
an input device (406) for allowing a user to select a more-detailed view of location data using the displayed view of location data (200).

8. A wireless device (400) according to claim 7, including:
a wireless interface (402); and
a removable storage (408) for storing location data.

9. A wireless device (400) according to claim 7 or 8, wherein the memory (410) stores at least a portion of the location data in one or more databases.

10. A wireless device (400) according to any one of clams 7 to 9, wherein the location data comprises a list of location data and/or an image divided into a plurality of segments.
